# EUROPEAN PATENT SPECIFICATION

(11) **EP 2 936 136 B1**
(45) Date of publication and mention of the grant of the patent: **21.03.2018**
(21) Application number: 13821504.1
(22) Date of filing: 18.12.2013
(51) Int. Cl.: G01N 27/72, G01N 27/90, G01L 1/12

(54) **DETECTING FAILURES IN FLEXIBLE MULTISTRAND STEEL STRUCTURES**
ERKENNUNG VON FEHLERN IN FLEXIBLEN MULTISTRANG-STAHLSTRUKTUREN
DETECTION DE DEFAUTS DANS DES STRUCTURES EN ACIER MULTIFIL SOUPLES

(30) Priority: 19.12.2012 GB 201222927
(43) Date of publication of application: 28.10.2015
(73) Proprietor: GE Oil & Gas UK Limited, Nailsea Bristol BS48 1BS (GB)
(72) Inventor: BUTTLE, David John, Wantage, Oxfordshire OX12 7DF (GB); HOLT, Christopher Cecil, Bampton, Oxfordshire OX18 2DT (GB); McCARTHY, John, Compton, Berkshire RG20 7RJ (GB); MORT, Peter, Wantage, Oxon OX12 7NP (GB)
(74) Representative: Illingworth-Law, William Illingworth
(86) International application number: PCT/GB2013/053338
(87) International publication number: WO 2014/096817

(56) References cited:
- WO-A1-2005/001466
- WO-A1-2006/067524
- GB-A- 2 475 314
- US-A1- 2002 186 023
- J A Pérez-Benitez ET AL: "Detection of Riser failure under applied static load using Magnetic Barkhausen Noise", 5th Pan American Conference for NDT, 2 October 2011 (2011-10-02), XP055110359, Retrieved from the Internet: URL:http://www.ndt.net/article/panndt2011/ papers/43_Perez-Benitez.pdf [retrieved on 2014-03-27]

## Description

This invention relates to a method and apparatus for inspecting flexible multistrand steel structures such as cables, hoses, or risers, for detecting failures.

Flexible risers are used to connect oil and gas wells to floating production platforms, the flexible riser being a steel-wire-reinforced flexible hose. Typically such a riser is connected to a turret on the floating platform, the turret providing some degree of rotation, and the flexible riser is typically hundreds or thousands of metres long. Failure in such a flexible riser can lead to significant quantities of oil leaking into the environment. It has been found that such risers typically fail close to the point at which the riser is connected to the turret, or to a support point along its length, this failure being due to the fatigue loading endured by the riser at the point where the forces are greatest due to wave motion and rotation of the floating platform. This failure mode is recognised, and US 7 876 096 (MAPS Technology Ltd) describes a way to inspect such risers to warn of catastrophic failure, applicable with the flexible riser in situ connected to the turret and carrying a product. However, an improved inspection method would be desirable. A further patent document US 2002/0186023 (General Electric Company) describes a method and a device for detecting core faults (short circuits) in a laminated core by positioning a magnetic yoke near the core tooth under test with three magnetic flux sensors situated on each of the two core facing surfaces of the yoke. The magnetic flux sensors are used to measure a signal resulting from an injected magnetic flux via the magnetic yoke.

An electromagnetic probe may be used to detect stress in the reinforcing wires or ligaments, but the measurements are complicated by the gaps between adjacent ligaments, which are typically not uniform and may vary during use. In the context of a riser there are a plurality of layers of wires or ligaments forming a cylindrical structure, and it would be desirable to be able to distinguish between effects that occur in different layers of ligaments.

According to one aspect of the present invention there is provided a method for inspecting a flexible elongate generally cylindrical structure comprising at least one layer of steel ligaments near the outer longitudinally-extending surface, the steel ligaments extending at least partly along the length of the structure, the method utilising an electromagnetic probe incorporating an electromagnetic coil to induce an alternating magnetic field and sensors for sensing an alternating magnetic flux density, the method comprising arranging the probe adjacent to the outer longitudinally-extending surface of the structure, and inducing an alternating magnetic field less than saturation in the steel ligaments using the electromagnetic probe, and sensing with the sensors the alternating magnetic flux density near the outer longitudinally extending surface of the structure, and scanning the probe over the surface, repeating the measurements at locations adjacent to different ligaments; from the flux density sensed by the sensors determining a parameter sensitive to stress in the ligaments, and from any variation of the said parameter between different ligaments detecting if any ligaments have broken or are over-stressed.

The current source may be arranged to supply a plurality of different frequencies in succession. For example measurements may be made at at least five different frequencies, and optionally eight or ten different frequencies or more.

The present invention also provides an apparatus for performing such an inspection. Thus in a second aspect, the present invention provides an apparatus for inspecting a flexible elongate generally cylindrical structure comprising at least one layer of steel ligaments near the outer longitudinally-extending surface, the steel ligaments extending at least partly along the length of the structure, the apparatus comprising an electromagnetic probe incorporating an electromagnetic coil to induce an alternating magnetic field and sensors for sensing an alternating magnetic flux density, means to support the probe adjacent to the outer longitudinally-extending surface of the structure, and means to scan the probe over the surface of the structure; and a current source to supply an alternating current to the electromagnetic coil to induce an alternating magnetic field less than saturation in the steel ligaments, wherein the current source is arranged to supply a plurality of different frequencies in succession.

In such an apparatus, and in the previously-described method, the probe may include an electromagnet core with two spaced apart poles, arranged to create the alternating magnetic field by means of a driving coil, wherein the probe is provided with separate sensors adjacent to the faces of the poles, with at least two sensors adjacent to each pole. The sensors may be sensing coils, or may be Hall effect sensors, or another electronic sensor of magnetic flux density. In a preferred embodiment, where there is a stand-off between the probe and the steel ligaments, each pole has a width (measured in the direction parallel to a line joining the centres of the poles) between 75% and 125% of the stand-off, and each sensor is of width between 75% and 100% of the width of the pole.

At any one location, measurements may be made at a plurality of different frequencies of the alternating magnetic field. A lower frequency may be selected so as to provide a skin depth in the steel that is between an eighth of and twice the thickness of a wire or ligament. For example a lower frequency may provide a skin depth substantially equal to a half or a quarter of the thickness of a wire or ligament. A higher frequency may be between 2 and 8 times greater than the lower frequency; if a higher frequency is 4 times greater than a lower frequency, the skin depth would be about half the previous value. However, in the context of a flexible riser with wires or ligaments in different layers, a varying magnetic field will induce eddy currents within the wires of a layer, and those eddy currents will induce a magnetic field in an adjacent layer, so the depth to which the signals penetrate the riser is not simply determined by the skin depth. The range of frequency may therefore be significantly greater than this, and the ratio between the lowest frequency and the highest frequency may be more than 10, for example 20, 30, 50, 80, 100, 150 or even 200. In a preferred embodiment, measurements are made at several different frequencies, for example at least five different frequencies, and optionally eight or ten different frequencies or more; such frequencies may for example be selected between 20 Hz and 4000 Hz, although frequencies between 20 Hz and 1000 Hz are sometimes satisfactory.

Measurements taken at different frequencies enable variations in the number of wires or ligaments in the vicinity of a probe to be distinguished from variations in the stress in the wires or ligaments. Measurements taken with different orientations of the magnetic field to the longitudinal axis of the ligaments may enable the effect of the different layers of ligaments to be distinguished. Hence the stresses of ligaments in different layers may be monitored. Measurements are preferably also made with different stresses in the riser, for example by changing the longitudinal tension in the riser or changing the pressure of the fluids within the riser, as this should change the stresses in all the wires or ligaments in the riser, and so may assist in distinguishing between residual stresses and applied stresses.

Flexible risers include a helically-wound steel wire layer to provide tensile strength near the outer surface of the riser, and usually include at least two such steel wire layers. The probe may be arranged such that the magnetic field is in a direction that is not parallel to the longitudinal axes of the ligaments. However, the ligaments in an outer layer will be in a different orientation to the ligaments in an adjacent layer further below the surface. The probe is of finite width, so there is a range of orientations of the probe at which at least one ligament in the outer layer would link the poles of the probe, i.e. pass directly under both the poles, and there is a range of orientations at which at least one ligament in the adjacent layer would link the poles. There may therefore be an advantage in taking measurements with a probe set at a range of different orientations relative to the direction of the ligaments. For example it may be advantageous to select four different orientations of the probe: such that the poles are linked by ligaments in the outer layer but not linked by those in the adjacent layer; such that the poles are not linked by ligaments in either the outer layer or the adjacent layer; such that the poles are not linked by ligaments in the outer layer but are linked by those in the adjacent layer; and such that the poles are linked by ligaments in both the outer layer and the adjacent layer. Alternatively, three different orientations might be selected, and these may correspond to three of these four options.

Flexible risers usually include at least two helically-wound steel wire layers, and sometimes more layers, and the failure mode typically involves fatigue fracture of one of the outer steel reinforcing wires or ligaments. When a wire fails in this way, the remaining intact wires must take the extra load, and therefore their total stress increases. By scanning such a probe along a scanning path which covers all the ligaments, the failure of one or more wires or ligaments will result in a variation of the measured stress along the scanning path. Where a ligament has broken, its stress will be significantly reduced, and this may be detected. An increase in stress in one region may indicate the failure of a ligament in a nearby region. An increase in stress might also indicate a failure in one of the reinforcing elements further below the surface.

Thus the method enables failure or over-stressing of a ligament or wire to be detected, and also provides some spatial resolution as to the location of the failure. Greater resolution can be obtained by using smaller probes, but smaller probes are more affected by lift-off from the surface. Typically the electromagnetic probe includes an electromagnet core with two spaced apart poles, arranged to create the alternating magnetic field by means of a driving coil. The magnetic sensor may be arranged to sense the reluctance (or flux-linkage) of that part of the magnetic circuit between the poles of the electromagnet means. One arrangement uses probes that are of diameter between 30 mm and 100 mm, for example about 60 mm, as such probes are not excessively affected by lift-off and nevertheless provide adequate spatial resolution. Another arrangement uses probes that are somewhat larger, for example between 75 mm and 150 mm, with separate small sensing coils adjacent to the faces of poles of a magnetic-field generating electromagnet. This can provide both insensitivity to lift-off and also good spatial resolution.

The stress-measurement method may involve resolving signals from the sensors into a component of the magnetic flux density in phase with the alternating magnetic field, and a component of the magnetic flux density which is in quadrature with the alternating magnetic field; and hence deducing a stress-dependent parameter which is substantially unaffected by lift-off. The signals from the sensors of the probe may be initially digitised, and then analysed.

The invention will now be further and more particularly described, by way of example only, and with reference to the accompanying drawings, in which:
Figure 1 shows a perspective cut-away view of part of a riser, to show its internal structure;
Figure 2 shows a perspective view of a probe for monitoring a riser as shown in figure 1, by making measurements of stress, some of the components being separated for clarity;
Figure 3 shows a diagrammatic plan view of the probe of figure 2 in use on the riser of figure 1;
Figure 4 shows a side view of the probe of figure 2 in use for inspecting the riser of figure 1, with a scanning mechanism;
Figure 5 shows a perspective view of an alternative scanning mechanism for use with the probe of figure 2; and
Figure 6 shows a sectional view of the scanning mechanism of figure 5 in position on a riser, being the view on the line 6-6 of figure 5.

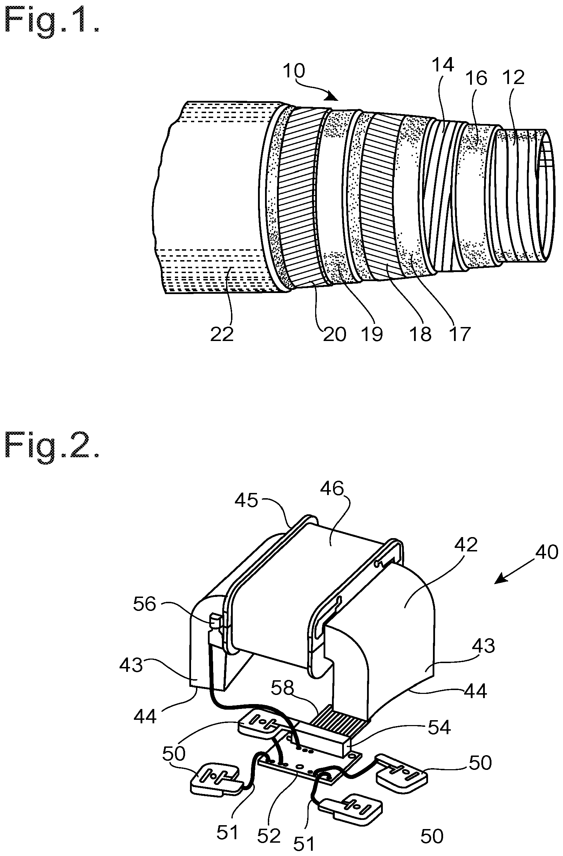

Referring to figure 1, a flexible riser 10, which acts as a hose to carry a pressurised fluid, has several concentric layers. An innermost layer 12 of helically wound bent steel strip provides resistance against external pressures, and a similar helically wound steel strip layer 14 provides hoop strength, and between these layers is a fluid barrier layer 16 of polymeric material. These are surrounded by two layers 18 and 20 of helically-wound steel ligaments or wires to provide tensile strength, the steel ligaments or wires within each layer 18 and 20 being wound side-by-side. Although adjacent ligaments or wires within a layer 18 or 20 are shown as being in contact, in practice there are narrow gaps between adjacent wires within the layer 18 or 20; such gaps ensure the flexibility of the riser 10. For example there may be 5 mm wide gaps between adjacent ligaments or wires in each layer 18 and 20, although in practice the gaps will not be of constant or consistent width as the riser 10 flexes.

The layers 18 and 20 are separated from the steel strip layer 14 and from each other by respective anti-wear layers 17 and 19. A polymeric layer 22 provides an external sleeve and fluid barrier; this layer 22 may be of thickness up to 30 mm, for example 20 mm or 12 mm. As discussed above, the failure mode with such a riser 10 is typically the failure of one or more ligaments in the outermost layer 20. But it will be appreciated that these ligaments cannot be observed directly, because they are enclosed within the polymeric layer 22.

The stresses in the outer layers 18 and 20 of steel ligaments of a riser 10 as shown in figure 1 may be monitored using an electromagnetic stress-measuring probe 40.

Referring now to figure 2 there is shown an exploded view of the probe 40, for use in measuring stress in steel wires that are embedded within a non-magnetic covering material, for example for the reinforcing wires within the flexible oilfield riser 10. In this example each wire is of width 12 mm and thickness 5 mm, and the wires are covered by a layer 22 of polymer that may be 12 mm or 20 mm thick. As mentioned above, each layer 18 and 20 consists of a single layer of side-by-side wires.

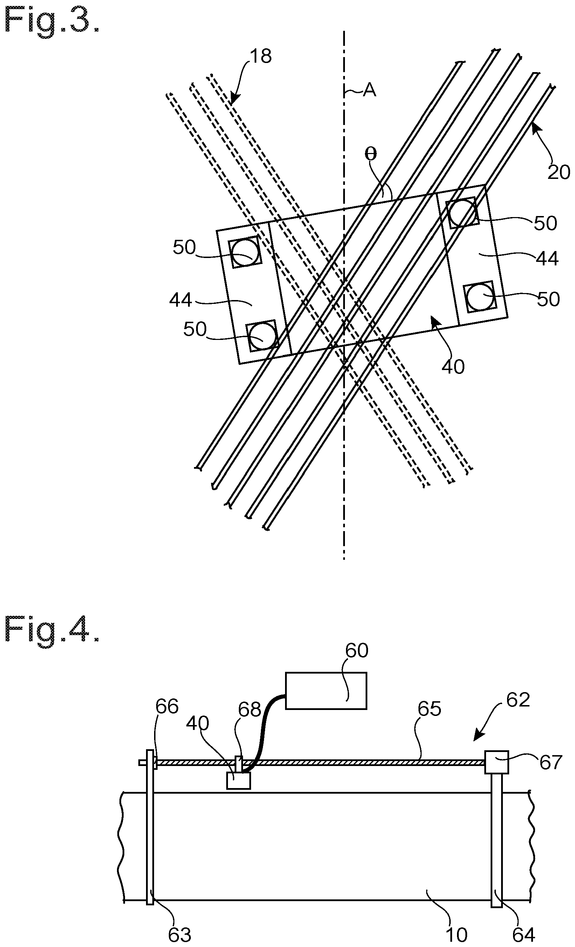

The probe 40 comprises a U-core 42 of laminated high-permeability silicon/iron alloy defining two poles 43 whose pole faces 44 are separated by a gap about 60 mm wide, and are each of width 60 mm, and of thickness 18 mm. The pole faces 44 are slightly curved to conform to the outer surface of the riser 10. Around the upper end of the U-core 42 is a former 45 on which is wound a drive coil 46. This coil 46, in operation of the probe 10, is supplied with an alternating sinusoidal drive current such that the alternating magnetic field induced in the steel wires below the surface of the riser 10 is considerably less than saturation. The drive current is supplied by a control unit 60 (shown in figure 4).

The probe 40 also comprises four flat sensor coils 50 each wound around a square former of side 17 mm, each coil being connected by a pair of wires 51 to a printed circuit board 52 that includes a head amplifier 54. The probe 40 also includes a temperature sensor 56 that is also connected to the printed circuit board 52. A flexible multi-wire strip 58 carries output signals from the head amplifier 54 to a signal analysis unit in the control unit 60. The sensor coils 50 are shown separated from the U-core 42, but in reality in the assembled probe 40 the sensor coils 50 are secured to the pole faces 44 near the corners of the probe 40, two sensor coils 50 being attached on each pole face 44. They may be fixed by adhesive, or they may be secured within a frame that is fixed to the U-core 42.

The sensor coils 50 are sufficiently small that if the probe 40 is suitably oriented each one is sensitive to a different steel wire within the riser, so that the properties of the separate wires can be distinguished, and can be measured simultaneously. Hence this arrangement provides greater resolution than would be possible using a sensor coil wound onto the core 42 or overwound onto the drive coil 46. Although in principle greater resolution could be obtained using even smaller sensors, for example of width less than the width of a steel wire, there would be significantly greater fluctuation from position to position, because of gaps between adjacent wires. It will be appreciated that the wires cannot be seen, because of the polymeric layer 22, so the sensors cannot be visually aligned with the wires.

The probe 40 may be used to measure stress in a ferromagnetic object (such as the wires in the layers 18 or 20) by a method such as that described in EP 1 436 604. In operation the probe 40 is placed adjacent to a surface of an object, and an alternating current of a desired frequency and amplitude is supplied to the drive coil 46, so the magnetic field in the object oscillates with an amplitude much less than saturation. The magnetic field may oscillate about zero, or alternatively there may be a steady magnetic field in addition to the alternating magnetic field. The sensor coils 50 provide signals, and the signals are analysed into components in phase and in quadrature with the alternating current supplied to the drive coil 46. Before the signals are processed they may be amplified and digitised.

Referring now to figure 3, this shows a diagrammatic plan view of the probe 40 in use adjacent to the outer surface of the riser 10. The figure is diagrammatic, and is intended to indicate the relative orientations, and therefore shows simultaneously features which are in different planes and are in reality not visible. The line A represents a line along the surface of the riser 10 parallel to its longitudinal axis; some of the wires of the outer layer 20 are shown in solid lines (only five are shown), and some of the wires of the intermediate layer 18 are shown in broken lines (only three are shown). Typically the wires in the outer layer 20 are in directions at an angle between 25° and 42° to the direction of the line A, while the wires in the intermediate layer 18 are at an angle that may be the same, or may be up to 4° different, but inclined in the opposite direction. For example the wires in the outer layer 20 may be at an orientation of +33°, and the wires in the intermediate layer 18 at an orientation of -34°, relative to the line A.

The probe 40 is shown as being arranged such that a straight line between the centres of the pole faces 44 (corresponding to the free space direction of the magnetic field) is at an angle θ to the orientation of the wires in the outer layer 20. This angle θ is shown as about 47° by way of example, but it will be appreciated that somewhat different results will be obtained if the probe 40 is at different angles θ. In the arrangement and position as shown, it will be appreciated that each sensor coil 50 locates above a different wire in the outer layer 20; each sensor coil 50 locates above a different wire in the intermediate layer 18; none of the wires in the outer layer 20 links the opposed pole faces 44; and none of the wires in the intermediate layer 18 links the opposed pole faces 44.

If, for example, the probe 40 is arranged so that the angle θ is 90°, then it would no longer be the case that each sensor coil 50 would locate above a different wire in the outer layer 20; and at least some of the wires in the intermediate layer 18 would link the opposed pole faces 44, and so link the poles 43. On the other hand, if the probe 40 is arranged so that the angle θ is 30°, then at least some of the wires in the outer layer 20 would link the opposed pole faces 44, and so the poles 43. Hence, by taking measurements with different orientations of the probe 40, it is possible to distinguish between properties of the wires in the outer layer 20 and the wires in the intermediate layer 18. In one embodiment, measurements are made with probes 40 that are set at angles θ equal to -30°, +30°, +60°, and +90°.

The orientation of the probe 40 is desirably selected to take into account the orientations of the wires in the layers 18 and 20. The orientations of the probe 40 may be selected to achieve the following four situations: the poles 43 are linked by wires in the outer layer 20 but not linked by those in the adjacent layer 18; the poles 43 are not linked by wires in either the outer layer 20 or the adjacent layer 18; the poles 43 are not linked by wires in the outer layer 20 but are linked by those in the adjacent layer 18; and the poles 43 are linked by ligaments in both the layers 18 and 20. However, depending on the dimensions of the probe 40 and the orientations of the wires or ligaments, not all of these options are necessary available.

It will be understood that the phrase "the poles 43 are linked" by specific wires means that those specific wires pass directly under both the poles 43 of the probe 40; consequently magnetic field lines between the poles 43 will tend to follow paths that extend longitudinally along such specific wires. Those specific wires hence form part of a magnetic circuit that links the poles 43. In a plan view corresponding to figure 3, i.e. looking in a radial direction towards the longitudinal axis of the riser 10, the lines that represent the specific wires will therefore intersect both the rectangles that represent the pole faces 44.

The orientations of the wires in the layers 18 and 20 are usually known, and the scanning direction is known. In the arrangement and orientation shown in figure 3, in which the sensor coils 50 are sufficiently small that each sensor coil 50 lies above a different wire in both the layers 18 and 20, then if the probe 40 is scanned in a given direction (for example the upwards direction parallel to the line A), and there is one broken wire, then the sequence in which the separate sensor coils 50 pass over the broken wire will depend upon whether the broken wire is in the outer layer 20 or the inner layer 18. This helps distinguish between broken wires in different layers 18 and 20.

In addition to taking measurements at different frequencies, measurements may also be taken with different stresses in the riser 10, for example by changing the pressure of the fluids within the riser 10. This should change the stresses in all the wires or ligaments in both layers 18 and 20, and can assist in distinguishing between residual stresses and applied stresses. In some cases the residual stresses vary significantly between the different wires or ligaments in each layer 18 and 20. The externally-applied stress in the riser 10 should change the stresses in all the wires or ligaments, but if a wire or ligament is broken then its stress will not be significantly altered by changes in the externally-applied stress. Hence the presence of a broken wire or ligament may be detected from the observation that the measured stress in that broken wire or ligament is not altered by a change in the externally-applied stress.

The measurements at different frequencies and at different orientations will be sensitive to different extents on the stresses in the wires or ligaments in the different layers 18 and 20, and may also be sensitive to stresses in the steel strip layer 14. The measurements can therefore be combined algebraically to provide stress-sensitive parameters that are predominantly sensitive to stresses in a single one of the layers 14, 18 or 20. Hence the presence of a broken wire or ligament in the layer 18 can for example be distinguished from the presence of a broken wire or ligament in the layer 20.

Referring now to figure 4, this shows a side view of the probe 40 during inspection of the riser 10. A scanning mechanism 62 includes two collars 63 and 64 which are clamped onto the riser 10. A threaded drive shaft 65 extends between a bearing 66 held by the collar 63, and an electric motor 67 held by the collar 64. The probe 40 is attached to a support bar 68 which engages with the threaded drive shaft 65.

In use, the probe 40 is set up at an appropriate angle θ, such as 60°; and the electric motor 67 is repeatedly and briefly activated to rotate the drive shaft 65 and consequently move the probe 40 along the riser 10. With this scanning mechanism 62 the probe 40 is scanned along a line parallel to the line A shown in figure 3, being moved in steps, and at each successive position measurements are made. Typically the probe 40 is moved along a distance no more than 15 mm, for example no more than 10 mm. In one example the probe 40 is moved along by 4 mm at each step, this distance being less than the separation between adjacent wires in the layer 18 and in the layer 20. At each successive position of the probe, measurements are made at a range of different frequencies. As an example, measurements may be made at at least six different frequencies between 20 Hz and 3000 Hz, e.g. at 35 Hz, 70 Hz, 140 Hz, 280 Hz, 560 Hz, 1200 Hz, 1600 Hz, 2400 Hz and 2900 Hz. Alternatively the frequencies may be selected between 20 Hz and 1000 Hz.

As the wires in both the intermediate layer 18 and the outer layer 20 follow helical paths, by scanning along the length of the riser 10 the probe 40 will eventually pass over every wire in each layer 18 and 20; the length of the drive shaft 65 is at least as long as the helical pitch of the wires in the layers 18 and 20, to ensure that every wire in each layer 18 and 20 is scanned.

Additional measurements may be obtained by setting up a probe 40 at a different angle θ, and repeating the procedure described above. If the probe 40 has a face that is shaped to fit the outer surface of the riser 10, this would normally require a different probe 40.

As previously mentioned, the first stage of the signal analysis involves digitisation, and resolving the signals into in-phase and quadrature components. Backing off (removal of a constant value) may optionally also be applied to the signals. The resulting signals may be used to obtain a stress-dependent measurement that is unaffected by lift-off, and so to deduce values of stress in the wires.

This analysis is somewhat complex, as the signals are affected by a range of different parameters. Although the wires of the layers 18 and 20 are shown in figure 3 as being accurately parallel and at fixed spacing, wires must be free to move in order to provide flexibility to the riser 10, so in practice the exact orientations and separations of the wires will vary, and indeed adjacent wires may come into contact with each other. If adjacent wires contact each other at more than one position, they would constitute a circuit for an electric current induced by the magnetic field (such a circuit may be referred to as a current loop). So the signals from the sensor coils 50 are not only affected by the stress in the wires, they are also affected by variations of lift-off (i.e. the radial distance between the wire and the probe), by variation in the spacing of the wires, and by the presence of any current loops. However, since these parameters give different effects at different frequencies, the measurements at multiple different frequencies enable them to be distinguished from each other. Furthermore, measurements may be made at different stresses, for example by altering the fluid pressure within the riser 10. Hence the signals can be analysed to provide information on stress in the wires of the intermediate layer 18, or stress in the wires of the outer layer 20, or the separation of the wires in the intermediate layer 18, or the separation of the wires in the outer layer 20.

It will be appreciated that the scanning mechanism 62 is shown by way of example. The scanning mechanism 62 may be modified in various ways, for example by providing a motor attached to the probe 40, and having a stationary threaded shaft 65. As another alternative the probe 40 might be guided and supported by a guide rod (equivalent to the drive shaft 65), the probe 40 also carrying a motor driving a wheel that engages the outer surface of the riser 10, so the probe 40 moves itself along the riser 10. Furthermore the mechanism may be arranged to scan a probe 40 along a different path. For example an alternative scanning mechanism is arranged to scan the probe 40 along a circular path around the circumference of the riser 10.

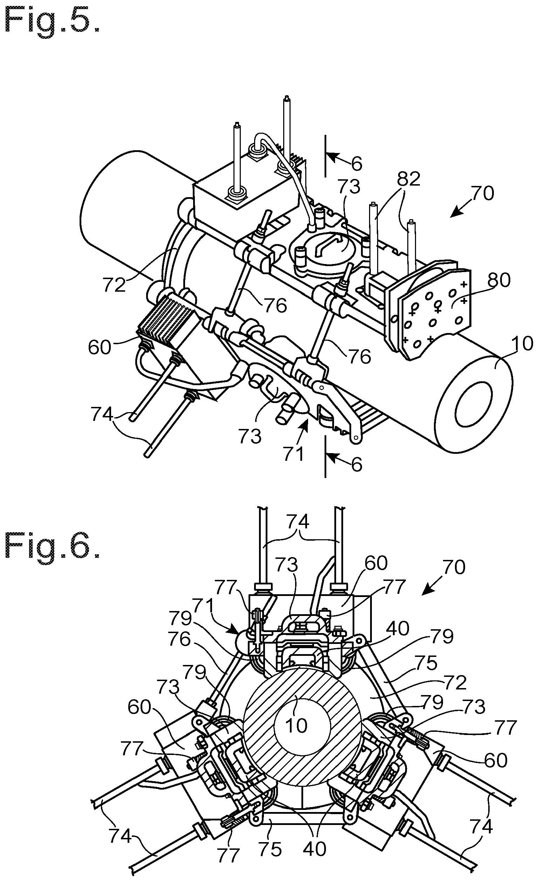

Referring now to figures 5 and 6, this shows a scanner 70 arranged to scan three probes 40 circumferentially around a riser 10 (the internal structure of the riser 10 not being shown). A ring 72 is clamped around the riser 10, and the scanner 70 has a frame 71 linked to this ring 72 so it can move circumferentially but not axially. The scanner 70 includes three probes 40, each probe 40 being enclosed within a plastic casing 73, and being connected to a respective control unit 60; power and data cables 74 are connected to each control unit 60. The frame 71 is in three parts, one part arranged to carry each plastic casing 73, and the parts are linked together: two of the links are provided by pivoted linking bars 75, while the third link comprises adjustable tie rods 76. Each plastic casing 73 is held into the frame 71 by spring-loaded bolts 77, which urge the poles 43 of the probes 40 towards the riser 10, and the frame 71 includes wheels 79 on either side of each probe 40, the wheels 79 resting on the surface of the riser 10. The provision of the tie rods 76 and the spring loaded bolts 77 ensures that risers 10 of different diameters can be accommodated. Almost all the components of the scanner 70 are of hard engineering plastic, to minimise their magnetic effect; and the springs are of stainless steel.

Referring in particular to figure 5, at the end of the frame 71 furthest from the ring 72 is a motor and drive wheel module 80, to which drive cables 82 are connected. The motor and drive wheel module 80 includes an electric motor which drives a drive wheel pressed against the outer surface of the riser, the rotation axis of the drive wheel being parallel to the longitudinal axis of the riser 10. Actuation of the module 80 therefore moves the frame 71 and the three probes 40 circumferentially around the riser 10, guided by the ring 72. As described in relation to the apparatus of figure 4, the scanner 70 is repeatedly moved a short distance, preferably no more than 15 mm, for example 4 or 5 mm, and at each new position of each probe 40 measurements are taken at a range of different frequencies with each probe 40. The signal analysis is substantially equivalent to that described above.

## Claims

1. An apparatus for inspecting a flexible elongate generally cylindrical structure (10) comprising at least two layers (18, 20) of steel ligaments near the outer longitudinally-extending surface, the steel ligaments extending at least partly along the length of the structure but the orientations of the ligaments of an outer layer (20) and of an adjacent inner layer (18) being different, the apparatus comprising an electromagnetic probe (40) incorporating an electromagnet core (42) with two spaced apart poles (43) and an electromagnetic driving coil (46) to induce an alternating magnetic field, and a current source (60) to supply an alternating current to the electromagnetic coil (46) to induce an alternating magnetic field less than saturation in the steel ligaments, wherein the current source (60) is arranged to supply a plurality of different frequencies in succession,
***characterised by*** the probe (40) also comprising at least four separate sensors (50) adjacent to the faces of the poles (43), configured to sense an alternating magnetic flux density, with at least two sensors (50) adjacent to the face of each pole (43) near corners of the probe (40), the probe (40) is configured to distinguish between broken ligaments in the inner layer (18) and the outer layer (20) by the sequence in which the separate sensors (50) pass over the broken ligament during scanning the cylindrical structure (10); means (65; 71) to support the probe adjacent to the outer longitudinally-extending surface of the structure (10), and a scanning mechanism (62; 70) to scan the probe (40) over the surface of the structure (10).

2. An apparatus as claimed in claim 1 also comprising signal analysis means for determining, from signals from the sensors (50), a parameter sensitive to stress in the ligaments, and from any variation of the said parameter between different ligaments detecting if any ligaments have broken or are over-stressed.

3. An apparatus as claimed in any one of the preceding claims wherein each steel ligament has a width, and each separate sensor (50) is of width less than twice the width of the steel ligament.

4. An apparatus as claimed in any one of the preceding claims wherein the scanning mechanism (62) includes a threaded driveshaft (65) and a motor (67).

5. An apparatus as claimed in any one of claims 1 to 3 wherein the scanning mechanism (70) comprises means (72) to guide the probe along a desired path, and a drive wheel (80) adapted to engage the surface of the structure (10).

6. A method for inspecting a flexible elongate generally cylindrical structure (10) comprising at least two layers (18, 20) of steel ligaments near the outer longitudinally-extending surface, the steel ligaments extending at least partly along the length of the structure (10) but the orientations of the ligaments of an outer layer (20) and of an adjacent inner layer (18) being different, the method utilising an electromagnetic probe (40) incorporating an electromagnet core (42) with two spaced apart poles (43) and an electromagnetic driving coil (46) to induce an alternating magnetic field, and at least four separate sensors (50) to detect an alternating magnetic flux density, the method comprising
arranging the probe (40) adjacent to the outer longitudinally-extending surface of the structure (10), inducing an alternating magnetic field less than saturation in the steel ligaments using the electromagnetic probe (40), sensing with all the separate sensors (50) the alternating magnetic flux density near the outer longitudinally extending surface of the structure (10), and scanning the probe (40) over the surface, repeating the measurements at locations adjacent to different ligaments; from the flux density sensed by the sensor (50) determining a parameter sensitive to stress in the ligaments, and from any variation of the said parameter between different ligaments detecting if any ligaments have broken or are over-stressed, wherein the sensors (50) of probe (40) being arranged adjacent to the faces of the poles (43) for sensing an alternating magnetic flux density, with at least two sensors (50) adjacent to the face of each pole (43) near corners of the probe (40), and the probe (40) distinguishing between broken ligaments in the inner layer (18) and the outer layer (20) by the sequence in which the separate sensors (50) pass over the broken ligament during scanning the cylindrical structure (10).

7. A method as claimed in claim 6 wherein, at any one location, measurements are made at a plurality of different frequencies of the alternating magnetic field.

8. A method as claimed in claim 7 wherein measurements are made at multiple frequencies, the lowest frequency and the highest frequency differing by a factor of at least 20.

9. A method as claimed in claim 7 or claim 8 wherein measurements are made at at least five different frequencies.

10. A method as claimed in any one of claims 6 to 9 wherein measurements are made with the magnetic field in a plurality of different orientations relative to the ligaments.

11. A method as claimed in any one of claims 6 to 10 wherein each steel ligament has a width, and each separate sensor (50) is of width less than twice the width of the steel ligament.

## Patentansprüche

1. Vorrichtung zur Überprüfung einer flexiblen, länglichen, allgemein zylindrischen Struktur (10), die mindestens zwei Schichten (18, 20) von Stahlbändern nahe der äußeren, sich längs erstreckenden Oberfläche umfasst, wobei die Stahlbänder sich mindestens teilweise entlang der Länge der Struktur erstrecken, doch die Orientierungen der Bänder einer äußeren Schicht (20) und einer benachbarten inneren Schicht (18) verschieden sind, wobei die Einrichtung eine elektromagnetische Sonde (40) umfasst, die einen Elektromagnetkern (42) mit zwei beabstandeten Polen (43) und eine elektromagnetische Antriebsspule (46) enthält, um ein wechselndes Magnetfeld zu erzeugen, und eine Stromquelle (60), um einen Wechselstrom an die elektromagnetische Spule (46) zu liefern, um ein wechselndes Magnetfeld kleiner als die Sättigung in den Stahlbändern zu erzeugen, wobei die Stromquelle (60) eingerichtet ist, nacheinander eine Vielzahl von verschiedenen Frequenzen zu liefern,
***dadurch gekennzeichnet, dass*** die Sonde (40) ebenfalls mindestens vier getrennte Sensoren (50) umfasst, die neben den Stirnflächen der Pole (43) liegen und konfiguriert sind, um eine wechselnde magnetische Flussdichte abzutasten, mit mindestens zwei Sensoren(50) neben der Stirnseite von jedem Pol (43) nahe Ecken der Sonde (40), wobei die Sonde (40) konfiguriert ist, um zwischen zerbrochenen Bändern in der inneren Schicht (18) und der äußeren Schicht (20) anhand der Folge, in der die getrennten Sensoren (50) über das zerbrochene Band während des Abtastens der zylindrischen Struktur (10) gehen, zu unterscheiden;
Mittel (65; 71) zum Abstützen der Sonde neben der äußeren, sich längs erstreckenden Oberfläche der Struktur (10), und ein Abtastmechanismus (62; 70), um die Sonde (40) über der Oberfläche der Struktur (10) abzutasten.

2. Vorrichtung nach Anspruch 1, ebenfalls umfassend Signalanalysemittel, um aus Signalen von den Sensoren (50) einen stressempfindlichen Parameter in den Bändern zu bestimmen und aus jeder Variation des Parameters zwischen verschiedenen Bändern festzustellen, ob irgendwelche Bänder zerbrochen oder überlastet sind.

3. Vorrichtung nach einem der vorstehenden Ansprüche, wobei jedes Stahlband eine Breite hat, und jeder getrennte Sensor (50) eine Breite aufweist, die kleiner ist als die doppelte Breite des Stahlbands.

4. Vorrichtung nach einem der vorstehenden Ansprüche, wobei der Abtastmechanismus (62) eine Antriebswelle mit Gewinde (65) und einen Motor (67) enthält.

5. Vorrichtung nach einem der Ansprüche 1 bis 3, wobei der Abtastmechanismus (70) Mittel (72) umfasst, um die Sonde entlang eines gewünschten Pfads zu führen, und ein Antriebsrad (80), das geeignet ist, um in Eingriff mit der Oberfläche der Struktur (10) zu treten.

6. Verfahren zum Überprüfen einer flexiblen, länglichen, allgemein zylindrischen Struktur (10), die mindestens zwei Schichten (18, 20) von Stahlbändern nahe der äußeren, sich längs erstreckenden Oberfläche umfasst, wobei die Stahlbänder sich mindestens teilweise entlang der Länge der Struktur (10) erstrecken, doch die Orientierungen der Bänder einer äußeren Schicht (20) und einer benachbarten inneren Schicht (18) verschieden sind, und wobei das Verfahren eine elektromagnetische Sonde (40) nutzt, die einen Elektromagnetkern (42) mit zwei beabstandeten Polen (43) und eine elektromagnetische Antriebsspule (46) enthält, um ein wechselndes Magnetfeld zu erzeugen, und mindestens vier getrennte Sensoren (50), um eine wechselnde magnetische Flussdichte festzustellen, wobei das Verfahren Folgendes umfasst:
Anordnen der Sonde (40) neben der äußeren, sich längs erstreckenden Oberfläche der Struktur (10), Erzeugen eines wechselnden Magnetfelds kleiner als die Sättigung in den Stahlbändern unter Anwendung der elektromagnetischen Sonde (40), mit allen getrennten Sensoren (50) Abtasten der wechselnden Magnetflussdichte nahe der äußeren, sich längs erstreckenden Oberfläche der Struktur (10) und Abtasten der Sonde (40) über der Oberfläche, Wiederholen der Messungen an Stellen neben verschiedenen Bändern; aus der Flussdichte, die vom Sensor (50) abgetastet wurde, Bestimmen eines stressempfindlichen Parameters in den Bändern, und aus jeder Variation des Parameters zwischen verschiedenen Bändern Feststellen, ob irgendwelche Bänder zerbrochen oder überlastet sind,
wobei die Sensoren (50) der Sonde (40) neben den Stirnflächen der Pole (43) angeordnet sind, um eine wechselnde Magnetflussdichte abzutasten, mit mindestens zwei Sensoren (50) neben der Stirnseite von jedem Pol (43) nahe Ecken der Sonde (40), und wobei die Sonde (40) zwischen zerbrochenen Bändern in der inneren Schicht (18) und der äußeren Schicht (20) anhand der Folge, in der die getrennten Sensoren (50) über das zerbrochene Band während des Abtastens der zylindrischen Struktur (10) gehen, unterscheidet.

7. Verfahren nach Anspruch 6, wobei an einer beliebigen Stelle Messungen bei einer Vielzahl von verschiedenen Frequenzen des wechselnden Magnetfelds durchgeführt werden.

8. Verfahren nach Anspruch 7, wobei Messungen bei mehreren Frequenzen durchgeführt werden, wobei die niedrigste Frequenz und die höchste Frequenz sich um einen Faktor von mindestens 20 unterscheiden.

9. Verfahren nach Anspruch 7 oder Anspruch 8, wobei Messungen bei mindestens fünf verschiedenen Frequenzen durchgeführt werden.

10. Verfahren nach einem der Ansprüche 6 bis 9, wobei Messungen mit dem Magnetfeld in einer Vielzahl von verschiedenen Orientierungen in Bezug auf die Bänder durchgeführt werden.

11. Verfahren nach einem der Ansprüche 6 bis 10, wobei jedes Stahlband eine Breite hat, und jeder getrennte Sensor (50) eine Breite aufweist, die kleiner als die doppelte Breite des Stahlbands ist.

## Revendications

1. Appareil d'inspection d'une structure généralement cylindrique flexible et allongée (10) comprenant au moins deux couches (18, 20) de ligaments d'acier à proximité de la surface externe s'étendant longitudinalement, les ligaments d'acier s'étendant au moins en partie sur la longueur de la structure, mais les orientations des ligaments d'une couche externe (20) et d'une couche interne adjacente (18) étant différentes, l'appareil comprenant une sonde électromagnétique (40) incorporant un noyau d'électro-aimant (42) avec deux pôles espacés (43) et une bobine d'entraînement électromagnétique (46) pour induire un champ magnétique alternatif, et une source de courant (60) pour fournir un courant alternatif à la bobine électromagnétique (46) afin d'induire un champ magnétique alternatif inférieur à la saturation dans le ligament d'acier, dans lequel la source de courant (60) est agencée pour fournir une pluralité de fréquences différentes à la suite,
**caractérisé en ce que** la sonde (40) comprend également au moins quatre capteurs séparés (50) adjacents aux faces des pôles (43) et configurés pour détecter une densité de flux magnétique alternatif avec au moins deux capteurs (50) adjacents à la face de chaque pôle (43) proche de coins de la sonde (40), la sonde (40) étant configurée pour distinguer entre des ligaments brisés de la couche interne (18) et de la couche externe (20) par la séquence dans laquelle les capteurs séparés (50) passent sur le ligament brisé au cours du balayage de la structure cylindrique (10) ;
des moyens (65 ; 71) pour supporter la sonde de manière adjacente à la surface externe s'étendant longitudinalement de la structure (10) et un mécanisme de balayage (62 ; 70) pour balayer la sonde (40) sur la surface de la structure (10).

2. Appareil selon la revendication 1, comprenant également des moyens d'analyse de signal pour déterminer à partir de signaux issus des capteurs (50) un paramètre sensible à la contrainte dans les filaments et à partir de toute variation dudit paramètre entre différents ligaments détectant si des ligaments quelconques se sont brisés ou sont surexposés à une contrainte.

3. Appareil selon l'une quelconque des revendications précédentes, dans lequel chaque ligament d'acier a une largeur et chaque capteur séparé (50) a une largeur inférieure à deux fois la largeur du ligament d'acier.

4. Appareil selon l'une quelconque des revendications précédentes, dans lequel le mécanisme de balayage (62) comprend un arbre d'entraînement fileté (65) et un moteur (67).

5. Appareil selon l'une quelconque des revendications 1 à 3, dans lequel le mécanisme de balayage (70) comprend des moyens (72) pour guider la sonde le long d'un trajet souhaité et une roue d'entraînement (80) qui est à même de s'engager sur la surface de la structure (10).

6. Procédé d'inspection d'une structure généralement cylindrique flexible et allongée (10) comprenant au moins deux couches (18, 20) de ligaments d'acier proches de la surface externe s'étendant longitudinalement, les ligaments d'acier s'étendant au moins en partie sur la longueur de la structure (10), mais les orientations des ligaments d'une couche externe (20) et d'une couche interne adjacente (18) étant différentes, le procédé utilisant une sonde électromagnétique (40) incorporant un noyau d'électroaimant (42) avec deux pôles séparés (43) et une bobine d'entraînement électromagnétique (46) pour induire un champ magnétique alternatif, et au moins quatre capteurs séparés (50) pour détecter une densité de flux magnétique alternatif, le procédé comprenant l'agencement de la sonde (40) de manière adjacente à la surface externe s'étendant longitudinalement de la structure (10), l'induction d'un champ magnétique alternatif inférieur à la saturation dans les ligaments d'acier en utilisant la sonde électromagnétique (40), la détection avec tous les capteurs séparés (50) de la densité de flux magnétique alternatif à proximité de la surface externe s'étendant longitudinalement de la structure (10) et le balayage de la sonde (40) sur la surface, la répétition des mesures à des emplacements adjacents à différents ligaments ; à partir de la densité de flux détectée par le capteur (50), la détermination d'un paramètre sensible à la contrainte dans les ligaments et à partir de toute variation dudit paramètre entre différents ligaments détectant si des ligaments quelconques se sont brisés ou sont surexposés à une contrainte, dans lequel les capteurs (50) de la sonde (40) sont agencés adjacents aux faces des pôles (43) pour détecter une densité de flux magnétique alternatif, avec au moins deux capteurs (50) adjacents à la face de chaque pôle (43) à proximité de coins de la sonde (40), et la sonde (40) distinguant entre des ligaments brisés dans la couche interne (18) et la couche externe (20) par la séquence dans laquelle les capteurs séparés (50) passent sur le ligament brisé au cours du balayage de la structure cylindrique (10).

7. Procédé selon la revendication 6, dans lequel, dans n'importe quel emplacement, des mesures sont effectuées à une pluralité de fréquences différentes du champ magnétique alternatif.

8. Procédé selon la revendication 7, dans lequel des mesures sont effectuées à de multiples fréquences, la fréquence la plus basse et la fréquence la plus élevée différant d'un facteur d'au moins 20.

9. Procédé selon la revendication 7 ou la revendication 8, dans lequel des mesures sont effectuées à au moins cinq fréquences différentes.

10. Procédé selon l'une quelconque des revendications 6 à 9, dans lequel des mesures sont effectuées avec le champ magnétique dans une pluralité de différentes orientations par rapport aux ligaments.

11. Procédé selon l'une quelconque des revendications 6 à 10, dans lequel chaque ligament d'acier a une largeur et chaque capteur séparé (50) a une largeur inférieure à deux fois la largeur du ligament d'acier.
